(19)

Europäisches
Patentamt
European
Patent Office
Office européen
des brevets

(11) **EP 4 456 236 A1**

(12) **EUROPEAN PATENT APPLICATION**
published in accordance with Art. 153(4) EPC

(43) Date of publication:
**30.10.2024 Bulletin 2024/44**

(21) Application number: **23816374.5**

(22) Date of filing: **31.05.2023**

(51) International Patent Classification (IPC):
**H01M 10/056** (2010.01)      **H01M 10/052** (2010.01)

(52) Cooperative Patent Classification (CPC):
**H01M 10/052; H01M 10/056;** Y02E 60/10

(86) International application number:
**PCT/KR2023/007475**

(87) International publication number:
**WO 2023/234714 (07.12.2023 Gazette 2023/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.05.2022 KR 20220067022**

(71) Applicant: **LG Energy Solution, Ltd.
Seoul 07335 (KR)**

(72) Inventors:
• **NAM, Sunghyun**
  **Daejeon 34122 (KR)**
• **HAN, Hyeaeun**
  **Daejeon 34122 (KR)**
• **KIM, Dong Kyu**
  **Daejeon 34122 (KR)**

(74) Representative: **Hoffmann Eitle
Patent- und Rechtsanwälte PartmbB
Arabellastraße 30
81925 München (DE)**

(54) **COMPOSITE SOLID ELECTROLYTE FOR LITHIUM SECONDARY BATTERY AND METHOD FOR MANUFACTURING SAME**

(57)   The present invention relates to a composite solid electrolyte for a lithium secondary battery and to a method for manufacturing same. The composite solid electrolyte, according to the present invention, forms a ceramic ion conductor by using a first polymer, which is a UV-curable polymer, and a ceramic compound, thereby making it possible to effectively improve ion conduction of lithium ions.

EP 4 456 236 A1

**Description**

[Technical Field]

This application claims the benefits of priorities based on Korean Patent Application No. 10-2022-0067022 filed on May 31, 2022 and Korean Patent Application No. 10-2023-0070203 filed on May 31, 2023, the entire contents of which are incorporated as part of this specification.

The present invention relates to a composite solid electrolyte for a lithium secondary battery and a preparation method thereof.

[Background Art]

Since a lithium-ion battery using a liquid electrolyte has a structure in which the negative electrode and the positive electrode are partitioned by a separator, if the separator is damaged by deformation or external impact, a short circuit may occur, which may lead to dangers such as overheating or explosion. Therefore, it can be said that the development of a solid electrolyte that can secure safety in the field of the lithium ion secondary battery is a very important task.

A lithium secondary battery using a solid electrolyte has the advantages of increasing the safety of the battery, preventing leakage of the electrolyte solution, improving the reliability of the battery, and making it easy to manufacture a thin battery. In addition, since lithium metal can be used as a negative electrode, energy density can be improved, and thus it is expected to be applied to high-capacity secondary batteries for electric vehicles, in addition to small secondary batteries, and is in the limelight as a next-generation battery.

Among the solid electrolytes, a polymer solid electrolyte may use a polymer material made of an ion conductive material or an inorganic material such as an oxide or sulfide having ion conductive properties, and a composite solid electrolyte in which polymer materials and inorganic materials are mixed is also proposed.

Such a conventional composite solid electrolyte was prepared by preparing a solution or slurry in which a polymer and an inorganic material were mixed and dispersed, and then casting the solution on a substrate by solution casting and drying it at a high temperature. However, the conventional preparation technology of the composite solid electrolyte has a limitation that it is difficult to prepare the composite solid electrolyte with improved ionic conductivity due to the formation of non-uniform distribution of inorganic particles in the composite solid electrolyte because the uniform dispersion of inorganic materials in the polymer solution is not smooth.

In order to overcome these limitations of conventional composite solid electrolytes, there is a demand for technology development capable of improving the ionic conductivity of a composite solid electrolyte including a polymer and an inorganic material uniformly dispersed therein.

[Prior art document]

[Patent document]

(Patent document 1) Korean Laid-open Patent Publication No. 10-2017-0045011

[Disclosure]

[Technical Problem]

It is an object of the present invention to provide a composite solid electrolyte with improved ionic conductivity.

It is another object of the present invention to provide a method for preparing a composite solid electrolyte with improved ionic conductivity.

It is still another object of the present invention to provide an all-solid-state battery including a composite solid electrolyte with improved ionic conductivity.

[Technical Solution]

In order to achieve the above objects, the present invention provides a method for preparing a composite solid electrolyte for a lithium secondary battery, including the steps of: (S1) forming a coating film by applying a solution for forming a composite solid electrolyte including a first polymer, which is a UV curable polymer, and a ceramic compound, on a substrate; (S2) preparing the first composite by irradiating the coating film with ultraviolet rays (UV), and then curing it; (S3) preparing a ceramic ion conductor by sintering the first composite; and (S4) preparing a second composite by immersing the ceramic ion conductor in a solution including the second polymer and the lithium salt and curing it.

The present invention also provides a composite solid electrolyte for a lithium secondary battery including a ceramic ion conductor including a ceramic compound; a second polymer; and a lithium salt, wherein the ceramic ion conductor comprises a cross-linked structure including the ceramic compound.

The present invention also provides an all-solid-state battery including the composite solid electrolyte for the lithium secondary battery.

[Advantageous Effects]

The composite solid electrolyte according to the present invention can effectively improve ion conduction of lithium ions by forming a ceramic ion conductor using a first polymer, which is a UV curable polymer, and a ceramic compound.

[Best Mode]

Hereinafter, the present invention will be described in more detail to aid understanding of the present invention.

The terms and words used in the present specification and claims should not be construed as limited to ordinary or dictionary terms, and should be construed in a sense and concept consistent with the technical idea of the present invention, based on the principle that the inventor can properly define the concept of a term to describe his invention in the best way possible.

**Preparation method of composite solid electrolyte for lithium secondary battery**

A method for preparing a composite solid electrolyte according to an embodiment of the present invention may comprise the following steps:

(S1) forming a coating film by applying a solution for forming a composite solid electrolyte including a first polymer, which is a UV curable polymer, and a ceramic compound, on a substrate;
(S2) preparing the first composite by irradiating the coating film with ultraviolet rays (UV), and then curing it;
(S3) preparing a ceramic ion conductor by sintering the first composite; and
(S4) preparing a second composite by immersing the ceramic ion conductor in a solution including the second polymer and the lithium salt and curing it.

A conventional composite solid electrolyte was prepared by coating a solution or slurry in which a polymer and an inorganic material are mixed and dispersed on a substrate by a method such as solution casting, and drying it. However, this method has a problem in that the ionic conductivity of the solid electrolyte is not improved due to non-uniform dispersion and precipitation of inorganic materials in the polymer solution.

In order to improve this, the inventors of the present invention have completed a composite solid electrolyte in which the particles of the ceramic compound are uniformly dispersed in the ceramic ion conductor and the ionic conductivity is improved, through the ceramic ion conductor prepared using a first polymer, which is a UV curable polymer, and a ceramic compound.

In the preparation method of the composite solid electrolyte, a solution including the first polymer, which is a UV curable polymer, and the ceramic compound is irradiated with ultraviolet rays and cured to prepare a first composite, so that the ceramic compound can be uniformly dispersed in the first polymer solution. By preparing a ceramic ion conductor in which the ceramic compound particles are uniformly dispersed, it is possible to improve the ionic conduction of lithium ions and prepare a composite solid electrolyte with improved ionic conductivity.

Hereinafter, the preparation method of the composite solid electrolyte according to the present invention will be described in detail for each step.

In the present invention, in the step (S1), a solution for forming a composite solid electrolyte including a first polymer, which is a UV curable polymer, and a ceramic compound was applied on the substrate to form a coating film.

The first polymer may be a UV curable polymer. The UV curable polymer means a polymer that forms optical cross-linkage using ultraviolet (UV) light. When the UV-curable polymer is irradiated with ultraviolet (UV) light in the presence of a photo-initiator, a photopolymerization reaction is initiated to form optical cross-linkage. Accordingly, the UV curable polymer may have a physical property that exhibits maximum absorbance in at least some wavelength region or the entire region of the ultraviolet (e.g., 300 nm to 400 nm wavelength) region in the absorbance spectrum for each wavelength.

The first polymer may comprise at least one selected from the group consisting of polyisocyanurate (PIR), epoxy, polyurethane, polyacrylate, and poly(methyl methacrylate) (PMMA) .

In the polyacrylate, examples of the UV curable acrylate-based monomer include hexanediol diacrylate (HDDA), tropropyleneglycoldiacrylate (TPGDA), ethyleneglycoldiacrylate (EGDA), trimethylolpropane triacrylate (TMPTA), trimethylolpropane ethoxylated triacrylate (TMPEOTA), glycerol propoxylated triacrylate (GPTA), pentaerythritol tetraacry-ylate (PETA), depentaerythritol hexaacrylate (DPHA) and the like, but are not limited thereto, and acrylate-based monomers commonly used in this field may be used without particular limitations.

The solution for forming the composite solid electrolyte may further include a photopolymerization initiator. Examples of the photopolymerization initiator includes 1-hydroxy-cyclohexyl-phenyl ketone, 2-hydroxy-2-methyl-1-phenyl-1-propanone, 2-hydroxy-1-[4-(2-hydroxyethoxy)phenyl]2-methyl-1-propanone, methylbenzoylformate, $\alpha,\alpha$-dimeth-oxy-$\alpha$-phenylacetophenone, 2-benzoyl-2-(dimethylamino)-1-[4-(4-morpholinyl)phenyl]-1-butanone, 2-methyl-1-[4[(methylthio)phenyl]-2(4-morpholinyl)-1-propanone diphenyl(2,4,6-trimethylbenzoyl)-phosphine oxide, or bis(2,4,6-trimethylbenzoyl)-phenylphosphine oxide, etc., but are not limited thereto. In addition, as the photopolymerization initiator, Irgacure 184, Irgacure 500, Irgacure 651, Irgacure 369, Irgacure 907, Darocur 1173, Darocur MBF, Irgacure 819, Darocur TPO, Irgacure 907, Esacure KIP 100F etc., which are currently on the market, can be used. The photopolymerization initiator may be used alone or in combination of two or more different types.

The content of the photo-initiator may be 1.0 to 5.0% by weight based on the content of the first polymer. If the content of the photo-initiator is less than 1.0% by weight or exceeding 5.0% by weight based on the content of the first polymer, since the cross-linkage between the first polymer and the ceramic compound is not formed, it may be difficult to form the cross-linked film.

The ceramic compound may be an oxide-based or phosphate-based solid electrolyte. The oxide-based or phosphate-based solid electrolyte may be at least one from the group consisting of a Garnet type lithium-lanthanum-zirconium oxide based compound (LLZO, $Li_7La_3Zr_2O_{12}$), perovskite type lithium-lanthanum-titanium oxide based compound (LLTO, $Li_{3x}La_{2/3-x}TiO_3$), NASICON type lithium-aluminum-titanium phosphate based compound of phosphate system (LATP, $Li_{1+x}Al_xTi_{2-x}(PO_4)_3$), lithium-aluminum-germanium phosphate based compound (LAGP, $Li_{1.5}Al_{0.5}Ge_{1.5}(PO_4)_3$), lithium-silicon-titanium phosphate based compound (LSTP, $LiSiO_2TiO_2(PO_4)_3$) and lithium-lan-thanum-zirconium-titanium oxide based compound (LLZTO). The oxide-based or phosphate-based solid electrolyte requires a sintering process at 1000 °C or higher because the grain boundary resistance is very high. Due to this, there are problems such as volatilization of lithium at high temperature, phase transition, and formation of impurity phases. However, the oxide-based or phosphate-based solid electrolyte generally has an ionic conductivity value of up to $10^{-4}$ ~ $10^{-3}$ S/cm at room temperature, is stable in a high voltage region, and is stable in air, and thus it has the advantage of being easy to synthesize and handle.

Therefore, it is possible to compensate for the disadvantages of each material through the preparation of a hybrid solid electrolyte by mixing the first polymer and a heterogeneous material according to the present invention.

Since the oxide-based or phosphate-based solid electrolyte does not easily burn or cause ignition even under high temperature conditions of 400 °C or higher, high temperature stability is high. Therefore, if the ceramic ion conductor includes the oxide-based or phosphate-based solid electrolyte, the mechanical strength of the composite solid electrolyte for the lithium secondary battery as well as high temperature stability and ionic conductivity can be improved.

The substrate is not particularly limited as long as it can serve as a support to which the solution for forming the composite solid electrolyte is applied. For example, the above substrate may be stainless steel (SS), polyethylene terephthalate film, polytetrafluoroethylene film, polyethylene film, polypropylene film, polybutene film, polybutadiene film, vinyl chloride copolymer film, polyurethane film, ethylene-vinyl acetate film, ethylene-propylene copolymer film, ethylene-ethyl acrylate copolymer film, ethylene-methyl acrylate copolymer film, or polyimide film.

In addition, the coating method is also not particularly limited as long as it is a method capable of applying the solution for forming the composite solid electrolyte in the form of a film on the substrate. For example, the coating method may be bar coating, roll coating, spin coating, slit coating, die coating, blade coating, comma coating, slot die coating, lip coating, or solution casting.

In the present invention, in the step (S2), the coating film may be irradiated with ultraviolet (UV) light, and then cured to prepare a first composite.

The conventional composite solid electrolyte was prepared as a film of the final composite solid electrolyte by preparing a solution in which a polymer and an inorganic material are mixed and dispersed, and then coating the solution on a substrate by a method such as solution casting, and then going through a drying process. However, since the inorganic materials are not uniformly dispersed in the polymer solution, and non-uniform distribution of inorganic particles is formed in the film of the final composite solid electrolyte, this composite solid electrolyte had a problem of low ionic conductivity and also had a problem of taking a long time to prepare.

Accordingly, the inventors of the present invention have completed a composite solid electrolyte with improved ionic conductivity by uniformly dispersing the particles of the ceramic compound in the first composite, through UV curing in a short time using the first polymer, which is the UV curable polymer.

The wavelength of ultraviolet (UV) light used in the curing reaction may be 200 to 400 nm.

In the first composite, the ceramic compound may be contained in an amount of 1 part by weight or more to less than 10 parts by weight based on 1 part by weight of the first polymer. More specifically, the weight ratio of the first polymer and the ceramic compound may be 1: 1, 1: 2, 1: 3, 1: 4, 1: 5, 1: 6, 1: 7, 1: 8 or 1: 9. If the ceramic compound is contained in an amount of less than 1 part by weight with respect to 1 part by weight of the first polymer, there is a problem that after the sintering process in step (S4) below, it is difficult to form a ceramic ion conductor with a cross-linked structure because the linkage between ceramic compounds is not smooth, and the mechanical properties are also weak and thus it is easily crumbled or destroyed, making the preparation of composite solid electrolyte impossible. In addition, if the ceramic compound is contained in an amount exceeding 10 parts by weight based on 1 part by weight of the first polymer, there is a problem that since the ceramic compound is not uniformly dispersed in the first polymer, a phenomenon in which the particles of the ceramic compound agglomerate and aggregate occurs, and a phase separation occurs between the first polymer and the agglomerated ceramic compound particles, thereby resulting in a composite solid electrolyte with reduced ionic conductivity.

In the present invention, in the step (S3), a ceramic ion conductor may be prepared by sintering the first composite.

As used herein, the term "sintering" refers to a process of applying sufficient temperature and pressure to make the first composite into a lump of harder particles.

The ceramic ion conductor may be prepared by sintering the first composite to thermally decompose the component of the first polymer and sintering particles of the remaining ceramic compound.

Through the sintering process, the first polymer plays a role as a support so that the particles of the ceramic compound can be connected to each other, and the particles of the ceramic compound may be connected to each other to form a ceramic ion conductor having a cross-linked structure.

The ceramic ion conductor may play a role of forming an ion conduction path of lithium ions.

The sintering may be performed by properly selecting conditions sufficient to thermally decompose the component of the first polymer and to form an ion conductor of a cross-linked structure by connecting the particles of the ceramic compound to each other. For example, the sintering temperature may be performed at a temperature of 800 °C to 1300 °C, specifically, the sintering temperature may be 850 °C or more, 900 °C or more, 950 °C or more, and may be 1300 °C or less, 1250 °C or less, 1200 °C or less.

In the present invention, in the step (S4), it is possible to prepare a second composite by immersing the ceramic ion conductor in a solution including the second polymer and the lithium salt and curing it.

Since the second composite includes the ceramic ion conductor, a composite solid electrolyte with improved ionic conductivity can be prepared.

The second polymer may be a polymer having excellent solubility and excellent degree of dissociation for the lithium salt, having no side reaction with a ceramic compound when mixing the second polymer and the lithium salt and allowing the polymer solution to permeate well into the ceramic ion conductor so that preparation of the final composite solid electrolyte is easy. Specific examples of the second polymer may include at least one selected from the group consisting of polyvinyl alcohol (PVA), polyethylene oxide (PEO), polyacrylate, poly(methyl methacrylate) (PMMA), poly(4-styrenesulfonyl(trifluoromethylsulfonyl)imide) (PSTFSI), polyurethane, nylon, poly(dimethylsiloxane), gelatin, methylcellulose, agar, dextran, poly(vinyl pyrrolidone), poly(acryl amide), poly(acrylic acid), starch-carboxymethyl cellulose, hyaluronic acid-methylcellulose, chitosan, poly(N-isopropylacrylamide), and amino-terminated polyethylene glycol (amino-terminated PEG).

In the present invention, the lithium salt is comprised in a dissociated state inside the structure formed by the ceramic ion conductor to improve the ionic conductivity of the composite solid electrolyte. In addition, the lithium salt is mainly dissociated inside the second polymer, and in step (S3), it can play a role of compensating for the loss of lithium ions generated from the particles of the ceramic compound during the high-temperature sintering process.

The lithium salt may include at least one selected from the group consisting of $(CF_3SO_2)_2NLi$ (Lithium bis(trifluoromethanesulphonyl)imide, LiTFSI), $(FSO_2)_2NLi$ (Lithium bis(fluorosulfonyl)imide, LiFSI), $LiNO_3$, LiOH, LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, LiSCN, and $LiC(CF_3SO_2)_3$.

The ceramic ion conductor prepared in the step (S3) is immersed in a solution including the second polymer and lithium salt, coated, and then cured. The immersion or coating and curing may be repeated a plurality of times.

The curing in the step (S4) may be thermal curing or UV curing.

The UV curing is as described above.

In the thermal curing step, a second composite having ion conductivity may be prepared by proceeding with curing while the ceramic ion conductor is immersed in a solution including the second polymer and the lithium salt.

The thermal curing step may be performed at 50 °C to 150 °C but is not limited thereto. For example, the thermal curing may be performed at 50 °C to 150 °C, 60 °C to 150 °C, 70 °C to 150 °C, 80 °C to 150 °C, 90 °C to 150 °C, 100 °C to 150 °C, 50 °C to 140 °C, 50 °C to 130 °C, 50 °C to 120 °C, 50 °C to 110 °C or 50 °C to 100 °C, but is not limited thereto. If the thermal curing step is performed below the temperature range described above, the formation of the second composite may be incomplete, and if the thermal curing step is performed beyond the temperature range described above, there may be difficulties in preparing the composite solid electrolyte due to thermal decomposition of the second polymer and the lithium salts.

The molar ratio ([Li]/[G]) of molar concentration ([G]) of the second polymer and the lithium ([Li]) in the lithium salt may be 0.1 to 0.5, specifically 0.1 or more, 0.2 or more, or 0.3 or more, and may be 0.4 or less or 0.5 or less. If the molar ratio ([Li] / [G]) is less than 0.1, the content of the lithium salt is reduced, and the ionic conductivity of the composite solid electrolyte may be lowered, and if the molar ratio ([Li]/[G]) exceeds 0.5, the ionic conductivity may decrease due to aggregation of lithium ions. Therefore, the composite solid electrolyte according to the present invention requires the composition of the second polymer and an appropriate amount of lithium salt in the second composite.

**Composite solid electrolyte for lithium secondary battery**

The composite solid electrolyte for the lithium secondary battery according to the present invention includes a ceramic ion conductor including a ceramic compound; a second polymer; and a lithium salt, wherein the ceramic ion conductor may include a cross-linked structure including the ceramic compound.

A conventional composite solid electrolyte was prepared by coating a solution or slurry, in which a polymer and an inorganic material were mixed and dispersed, on a substrate by a method such as a solution casting, and drying it. However, this method had a problem that the ionic conductivity of the solid electrolyte is not improved due to the non-uniform dispersion and precipitation of the inorganic materials in the polymer solution.

In order to improve this, the present invention intends to provide a composite solid electrolyte including a ceramic ion conductor including a cross-linked structure forming an ion conduction path of lithium ions, a polymer and a lithium salt. The ceramic ion conductor can play a role of improving the ionic conductivity of the composite solid electrolyte by uniformly dispersing particles of the ceramic compound therein.

In an embodiment of the present invention, the ceramic ion conductor may include a cross-linked structure including the ceramic compound.

The ceramic ion conductor may include one cross-linked structure formed by connecting particles of the ceramic compound to each other. The first polymer plays a role of a support so that the particles of the ceramic compound can be connected to each other.

The ceramic ion conductor may play a role of forming an ion conduction path of lithium ions.

The specific preparation method of the ceramic ion conductor is as described above.

The first polymer may include at least one selected from the group consisting of polyisocyanurate (PIR), epoxy, polyurethane, polyacrylate, and poly(methyl methacrylate (PMMA).

In the polyacrylate, examples of the UV curable acrylate-based monomer include hexanediol diacrylate (HDDA), tropropyleneglycoldiacrylate (TPGDA), ethyleneglycoldiacrylate (EGDA), trimethylolpropane triacrylate (TMPTA), trimethylolpropane ethoxylated triacrylate (TMPEOTA), glycerol propoxylated triacrylate (GPTA), pentaerythritol tetraacrylate (PETA), depentaerythritol hexaacrylate (DPHA) and the like, but are not limited thereto, and acrylate-based monomers commonly used in this field may be used without particular limitations.

The ceramic compound may be an oxide-based or phosphate-based solid electrolyte. The oxide-based or phosphate-based solid electrolyte may be at least one from the group consisting of a Garnet type lithium-lanthanum-zirconium oxide based compound (LLZO, $Li_7La_3Zr_2O_{12}$), perovskite type lithium-lanthanum-titanium oxide based compound (LLTO, $Li_{3x}La_{2/3-x}TiO_3$), NASICON type lithium-aluminum-titanium phosphate based compound of phosphate system (LATP, $Li_{1+x}Al_xTi_{2-x}(PO_4)_3$), lithium-aluminum-germanium phosphate based compound (LAGP, $Li_{1.5}Al_{0.5}Ge_{1.5}(PO_4)_3$), lithium-silicon-titanium phosphate based compound (LSTP, $LiSiO_2TiO_2 (PO_4)_3$), and lithium-lanthanum-zirconium-titanium oxide based compound (LLZTO). The oxide-based or phosphate-based solid electrolyte requires a sintering process at 1000 °C or higher because the grain boundary resistance is very high. Due to this, there are problems such as volatilization of lithium at high temperature, phase transition, and formation of impurity phases. However, the oxide-based or phosphate-based solid electrolyte generally has an ionic conductivity value of up to $10^{-4}$ ∼ $10^{-3}$ S/cm at room temperature, is stable in a high voltage region, and is stable in air, and thus it has the advantage of being easy to synthesize and handle.

In an embodiment of the present invention, the composite solid electrolyte for the lithium secondary battery may include a ceramic ion conductor; a second polymer; and a lithium salt.

The ceramic ion conductor is as described above.

The second polymer may be a polymer having excellent solubility and excellent degree of dissociation for the lithium salt, having no side reaction with a ceramic compound when mixing the second polymer and the lithium salt and allowing the polymer solution to permeate well into the ceramic ion conductor so that preparation of the final composite solid electrolyte is easy. Specific examples of the second polymer may include at least one selected from the group consisting of polyvinyl alcohol (PVA), polyethylene oxide (PEO), polyacrylate, poly(methyl methacrylate) (PMMA), poly(4-styrenesulfonyl(trifluoromethylsulfonyl)imide (PSTFSI), polyurethane, nylon, poly(dimethylsiloxane), gelatin, methylcellulose, agar, dextran, poly(vinyl pyrrolidone), poly(acryl amide), poly(acrylic acid), starch-carboxymethyl cellulose, hyaluronic acid-methylcellulose, chitosan, poly(N-isopropylacrylamide) and amino-terminated polyethylene glycol (amino-terminated PEG).

In the present invention, the lithium salt is comprised in a dissociated state inside the structure formed by the ceramic ion conductor to improve the ionic conductivity of the composite solid electrolyte.

The lithium salt may comprise at least one selected from the group consisting of $(CF_3SO_2)_2NLi$ (Lithium bis(tri-fluoromethanesulphonyl)imide, LiTFSI), $(FSO_2)_2NLi$ (Lithium bis(fluorosulfonyl)imide, LiFSI), $LiNO_3$, LiOH, LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, LiSCN, and LiC $(CF_3SO_2)_3$.

The molar ratio ([Li]/[G]) of molar concentration ([G]) of the second polymer and the lithium ([Li]) in the lithium salt may be 0.1 to 0.5, specifically 0.1 or more, 0.2 or more, or 0.3 or more, and may be 0.4 or less or 0.5 or less. If the molar ratio ([Li]/[G]) is less than 0.1, the content of the lithium salt is reduced, and the ionic conductivity of the composite solid electrolyte may be lowered, and if the molar ratio ([Li]/[G]) exceeds 0.5, the ionic conductivity may decrease due to aggregation of lithium ions. Therefore, the composite solid electrolyte according to the present invention requires the composition of the second polymer and an appropriate amount of lithium salt in the second composite.

In the present invention, the composite solid electrolyte may be in the form of a free-standing film. The free-standing film means a film capable of maintaining a film shape by itself without a separate support at room temperature and normal pressure.

Since the free-standing film exhibits elasticity to minimize brittleness and has characteristics as a support that stably includes lithium ions, it may be in a suitable form as a composite solid electrolyte.

In the present invention, the ionic conductivity of the composite solid electrolyte may be $10^{-5}$ S/cm or more.

As described above, although the composite solid electrolyte is a solid electrolyte, it can improve the performance of an all-solid-state battery by exhibiting an ionic conductivity equivalent to or higher than that of conventional liquid electrolytes.

**All-solid-state battery**

The present invention also relates to an all-solid-state battery including the composite solid electrolyte, wherein the all-solid-state battery includes a negative electrode, a positive electrode, and a composite solid electrolyte interposed between the negative electrode and the positive electrode, and the composite solid electrolyte has the above-described characteristics.

Specifically, since the composite solid electrolyte includes a ceramic ion conductor and thus improves ion conduction of lithium ions, it may be suitable as an electrolyte for an all-solid-state battery.

In the present invention, the positive electrode included in the all-solid-state battery includes a positive electrode active material layer, and the positive electrode active material layer may be formed on one surface of the positive electrode current collector.

The positive electrode active material layer includes a positive electrode active material, a binder, and a conductive material.

In addition, the positive electrode active material is not particularly limited as long as it is a material capable of reversibly intercalating and de-intercalating lithium ions, and for example, may be, but is not limited to, layered compounds or compounds substituted with one or more transition metals, such as lithium cobalt oxide ($LiCoO_2$), lithium nickel oxide ($LiNiO_2$), $Li[Ni_xCo_yMn_zM_v]O_2$(wherein, M is any one or two or more elements selected from the group consisting of Al, Ga and In; $0.3 \leq x < 1.0$, $0 \leq y$, $z \leq 0.5$, $0 \leq v \leq 0.1$, x+y+z+v=1), $Li(Li_aM_{b-a-b'}M'_{b'})O_{2-c}A_c$ (wherein, $0 \leq a \leq 0.2$, $0.6 \leq b \leq 1$, $0 \leq b' \leq 0.2$, $0 \leq c \leq 0.2$; M comprises Mn and at least one selected from the group consisting of Ni, Co, Fe, Cr, V, Cu, Zn and Ti; M' is at least one selected from the group consisting of Al, Mg and B, and A is at least one selected from the group consisting of P, F, S and N); lithium manganese oxide such as Formula $Li_{1+y}Mn_{2-y}O_4$ (wherein, y is 0 - 0.33), $LiMnO_3$, $LiMn_2O_3$, $LiMnO_2$; lithium copper oxide ($Li_2CuO_2$) ; vanadium oxide such as $LiV_3O_8$, $LiFe_3O_4$, $V_2O_5$, $Cu_2V_2O_7$; Ni site type lithium nickel oxide represented by Formula $LiNi_{1-y}MyO_2$ (wherein, M=Co, Mn, Al, Cu, Fe, Mg, B or Ga, y=0.01 - 0.3); lithium manganese composite oxide represented by Formula $LiMn_{2-y}M_yO_2$ (wherein, M=Co, Ni, Fe, Cr, Zn or Ta, y=0.01 - 0.1) or $Li_2Mn_3MO_8$ (wherein, M=Fe, Co, Ni, Cu or Zn) ; $LiMn_2O_4$ in which part of Li in the Formula is substituted with alkaline earth metal ions; disulfide compounds; and $Fe_2(MoO_4)_3$.

In addition, the positive electrode active material may be contained in an amount of 40 to 80% by weight based on the total weight of the positive electrode active material layer. Specifically, the content of the positive electrode active material may be 40% by weight or more or 50% by weight or more, and may be 70% by weight or less or 80% by weight or less. If the content of the positive electrode active material is less than 40% by weight, the connectivity between the wet positive electrode active material layer and the dry positive electrode active material layer may be insufficient. If the content of the positive electrode active material exceeds 80 % by weight, mass transfer resistance may be increased.

In addition, the binder is a component that assists bonding between the positive electrode active material and the conductive material, and assists in bonding to the current collector. The binder may comprise at least one selected from the group consisting of styrene-butadiene rubber, acrylated styrene-butadiene rubber, acrylonitrile copolymer, acrylonitrile-butadiene rubber, nitrile butadiene rubber, acrylonitrile-styrene-butadiene copolymer, acrylic rubber, butyl rubber, fluorine rubber, polytetrafluoroethylene, polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polyepichlorohydrin, polyphosphazene, polyacrylonitrile, polystyrene, latex, acrylic resin, phenolic resin, epoxy resin, carboxymethylcellulose, hydroxypropyl cellulose, cellulose acetate, cellulose acetate butyrate, cellulose acetate propionate, cyanoethyl cellulose, cyanoethyl sucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride, and poly(vinylidene fluoride)-hexafluoropropene. Preferably, the binder may comprise at least one selected from the group consisting of styrene-butadiene rubber, polytetrafluoroethylene, carboxymethyl cellulose, polyacrylic acid, lithium polyacrylate, and polyvinylidene fluoride.

In addition, the binder may be contained in an amount of 1% by weight to 30% by weight based on the total weight of the positive electrode active material layer, and specifically, the content of the binder may be 1% by weight or more or 3% by weight or more, and may be 15% by weight or less or 30% by weight or less. If the content of the binder is less than 1% by weight, the adhesive force between the positive electrode active material and the positive electrode current collector may be lowered. If the content of the binder exceeds 30% by weight, the adhesive force is improved, but the content of the positive electrode active material is reduced by that amount, and thus the capacity of the battery may be lowered.

In addition, the conductive material is not particularly limited as long as it prevents side reactions in the internal environment of the all-solid-state battery and has excellent electrical conductivity without causing chemical changes in the battery. The conductive material may be typically graphite or conductive carbon, and for example, graphite such as natural graphite, artificial graphite; carbon black such as carbon black, acetylene black, Ketjen black, Denka black, thermal black, channel black, furnace black, lamp black, thermal black; carbon-based materials whose crystal structure is graphene or graphite; conductive fibers such as carbon fibers and metal fibers; carbon fluoride; metal powders such as aluminum powder and nickel powder; conductive whiskers such as zinc oxide and potassium titanate; conductive oxides such as titanium oxide; and conductive polymers such as polyphenylene derivatives may be used alone or in combination of two or more thereof as the conductive material, but is not necessarily limited thereto.

The conductive material may be generally contained in an amount of 0.5% by weight to 30% by weight based on the total weight of the positive electrode active material layer, and specifically, the content of the conductive material may be 0.5% by weight or more or 1% by weight or more, and may be 20% by weight or less or 30% by weight or less. If the content of the conductive material is too small, i.e., less than 0.5 % by weight, it is difficult to expect an effect of improving electrical conductivity or the electrochemical properties of the battery may be deteriorated. If the content of the conductive material exceeds 30% by weight and thus is too large, the amount of the positive electrode active material may be relatively small, so that the capacity and energy density may be lowered. A method for incorporating the conductive material to the positive electrode is not particularly limited, and a conventional method known in the art, such as coating on the positive electrode active material, may be used.

In addition, the positive electrode current collector supports the positive electrode active material layer, and serves to transfer electrons between the external conductive wire and the positive electrode active material layer.

The positive electrode current collector is not particularly limited as long as it has high electrical conductivity without causing chemical changes in the all-solid-state battery. For example, as the positive electrode current collector, copper, stainless steel, aluminum, nickel, titanium, palladium, sintered carbon; a copper or stainless steel surface-treated with carbon, nickel, silver, etc.; an aluminum-cadmium alloy, etc. may be used.

The positive electrode current collector may have a fine irregularity structure on the surface of the positive electrode current collector or have a three-dimensional porous structure, in order to strengthen the bonding force with the positive electrode active material layer. Accordingly, the positive electrode current collector may comprise various forms such as a film, a sheet, a foil, a mesh, a net, a porous body, a foam, and a non-woven fabric.

The positive electrode as described above may be prepared by the conventional method, and specifically, the positive electrode is manufactured by coating and drying a composition for forming the positive electrode active material layer prepared by mixing the positive electrode active material, the conductive material and the binder in an organic solvent, onto the positive electrode current collector, and optionally compression-molding it onto the current collector to improve the electrode density. At this time, as the organic solvent, it is preferable to use one that can uniformly disperse the positive electrode active material, the binder, and the conductive material and that evaporates easily. Specifically, acetonitrile, methanol, ethanol, tetrahydrofuran, water, isopropyl alcohol and the like are exemplified.

In the present invention, the negative electrode comprised in the all-solid-state battery comprises a negative electrode active material layer, and the negative electrode active material layer may be formed on one surface of the negative electrode current collector.

The negative electrode active material may be a material capable of reversibly intercalating or de-intercalating lithium ion ($Li^+$), a material capable of reacting with lithium ion to reversibly form a lithium-including compound, lithium metal or a lithium alloy.

The material capable of reversibly intercalating or de-intercalating lithium ion ($Li^+$) may be, for example, crystalline carbon, amorphous carbon or mixtures thereof. The material capable of reacting with the lithium ion ($Li^+$) to reversibly form a lithium-including compound may be, for example, tin oxide, titanium nitrate, or silicon. The lithium alloy may be, for example, an alloy of lithium (Li) and the metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

Preferably, the negative electrode active material may be lithium metal, and specifically, may be in the form of a lithium metal thin film or lithium metal powder.

The negative electrode active material may be contained in an amount of 40 to 80% by weight based on the total weight of the negative electrode active material layer. Specifically, the content of the negative electrode active material may be 40 % by weight or more or 50 % by weight or more, and may be 70 % by weight or less or 80 % by weight or less. If the content of the negative electrode active material is less than 40% by weight, the connectivity between the wet negative electrode active material layer and the dry negative electrode active material layer may be insufficient. If the content of the negative electrode active material exceeds 80 % by weight, mass transfer resistance may be increased.

In addition, the binder is the same as described above for the positive electrode active material layer.

In addition, the conductive material is the same as described above for the positive electrode active material layer.

In addition, the negative electrode current collector is not particularly limited as long as it has conductivity without causing chemical change in the battery, and for example, the negative electrode current collector may be copper, stainless steel, aluminum, nickel, titanium, sintered carbon; copper or stainless steel surface-treated with carbon, nickel, titanium, silver, etc.; or aluminum-cadmium alloy. In addition, the negative electrode current collector may be used in various forms, such as a film having fine irregularity on its surface, a sheet, a foil, a net, a porous body, a foam, and a non-woven fabric, as in the positive electrode current collector.

The manufacturing method of the negative electrode is not particularly limited, and may be manufactured by forming a negative electrode active material layer on a negative electrode current collector using a layer or film formation method commonly used in the art. For example, a method such as pressing, coating, or vapor deposition may be used. Also, a case where a thin film of a metal lithium is formed on a metal plate by initial charging after assembling the battery without a lithium thin film on the negative electrode current collector is also included in the negative electrode of the present invention.

In addition, the present invention provides a battery module including the all-solid-state battery as a unit cell, a battery pack including the battery module, and a device including the battery pack as a power source.

In this case, examples of the above device may comprise, but are not limited to, a power tool powered by an electric motor; electric cars including an electric vehicle (EV), a hybrid electric vehicle (HEV), a plug-in hybrid electric vehicle (PHEV), and the like; electric motorcycles including an electric bike (E-bike) and an electric scooter (E-scooter); an electric golf cart; and a power storage system. Hereinafter, preferred examples are presented to aid understanding of the present invention, but the following examples are only illustrative of the present invention, and it will be apparent to those skilled in the art that various changes and modifications can be made within the scope and technical idea of the present invention, and also it is natural that such variations and modifications are within the scope of the appended claims.

Hereinafter, preferred examples are presented to aid understanding of the present invention, but the following examples are provided to help understand the present invention more easily, and the present invention is not limited thereto.

In the following the Examples and the Comparative Examples, a ceramic ion conductor including a polymer, a ceramic compound, etc. as described in Table 1 below was prepared, and a composite solid electrolyte including the same was prepared.

Table 1:

| | First polymer | Ceramic compound | Weight ratio of first polymer and ceramic compound | Content of photo-initiator (wt%) | Whether or not UV is irradiated | Whether or not sintering process is applied | Second polymer | Lithium salt | [Li]/[O] |
|---|---|---|---|---|---|---|---|---|---|
| **Example 1** | PIR | LLZO | 1: 2 | 1 | ○ | ○ | PVA | LiTFSI | 0.4 |

(continued)

| | First polymer | Ceramic compound | Weight ratio of first polymer and ceramic compound | Content of photo-initiator (wt%) | Whether or not UV is irradiated | Whether or not sintering process is applied | Second polymer | Lithium salt | [Li]/[O] |
|---|---|---|---|---|---|---|---|---|---|
| Example 2 | PIR | LSTP | 1:2 | 1 | ○ | ○ | PVA | LiTFSI | 0.4 |
| Example 3 | PIR | LLZO | 1:10 | 1 | ○ | ○ | PVA | LiTFSI | 0.4 |
| Example 4 | PIR | LLZO | 10:1 | 1 | ○ | ○ | PVA | LiTFSI | 0.4 |
| Example 5 | PIR | LLZO | 1:2 | 0.1 | ○ | ○ | PVA | LiTFSI | 0.4 |
| Example 6 | PIR | LLZO | 1:2 | 0.4 | ○ | ○ | PVA | LiTFSI | 0.4 |
| Example 7 | PIR | LLZO | 1:2 | 1 | ○ | ○ | PVA | LiTFSI | 0.08 |
| Example 8 | PIR | LLZO | 1:2 | 1 | ○ | ○ | PVA | LiTFSI | 0.52 |
| Example 9 | PIR | LLZO | 1:2 | 1 | ○ | ○ | PEO | LiTFSI | 0.4 |
| Example 10 | PIR | LLZO | 1:2 | 1 | ○ | ○ | PIR | LiTFSI | 0.4 |
| Comparative Example 1 | PIR | LLZO | 1:2 | 1 | ○ | X | - | - | - |
| Comparative Example 2 | PIR | LLZO | 1:2 | 1 | X (simple drying) | X | - | - | - |

**Example 1: Preparation of composite solid electrolyte**

**(1) Preparation of first composite**

A solution including thiol-ene polyisocyanurate (PIR) and LLZO powder, which is a ceramic compound, was prepared. 1% by weight of 2-hydroxy-2-methyl-1-phenyl-1-propanone as a photo-initiator was added to the prepared solution. At this time, the weight ratio of PIR and LLZO was set to 1:2.

The solution was applied on SS foil, which is a base material, by a bar coating, and then irradiated with ultraviolet (UV) light, and then cured to induce cross-linkage of PIR, thereby preparing a network-type composite.

**(2) Preparation of ceramic ion conductor**

The composite was separated from the substrate, heated from room temperature to 800 °C at a rate of 1 °C/min, and then sintered at 800 °C for 2 hours to thermally decompose the components of the PIR, and the remaining LLZO particles were sintered to prepare a ceramic ion conductor formed.

**(3) Preparation of composite solid electrolyte**

A solution including PVA and LiTFSI was prepared (wherein, the molar ratio of "O" included in PVA and "Li" included in lithium salt ([Li]/[O]) was 0.4), and the ceramic ion conductor was immersed in the prepared solution, and then, dried at room temperature for 12 hours, and then, dried in a vacuum drying oven at 100 °C for 12 hours to completely remove residual solvent, thereby preparing a composite solid electrolyte.

**Example 2**

A composite solid electrolyte was prepared in the same manner as in Example 1, except that LSTP is used instead of LLZO, which is a ceramic compound.

**Example 3**

A composite solid electrolyte was prepared in the same manner as in Example 1, except that the weight ratio of the UV curable polymer (PIR) and the ceramic compound (LLZO) is 1:10.

**Example 4**

A composite solid electrolyte was prepared in the same manner as in Example 1, except that the weight ratio of the UV curable polymer (PIR) and the ceramic compound (LLZO) is 10:1.

**Example 5**

A composite solid electrolyte was prepared in the same manner as in Example 1, except that 0.1% by weight of the photo-initiator content is used.

**Example 6**

A composite solid electrolyte was prepared in the same manner as in Example 1, except that 0.4% by weight of the photo-initiator content is used.

**Example 7**

A composite solid electrolyte was prepared in the same manner as in Example 1, except that the molar ratio ([Li]/[O]) of "O" included in PVA and "Li" included in lithium salt is 0.08.

**Example 8**

A composite solid electrolyte was prepared in the same manner as in Example 1, except that the molar ratio ([Li]/[O]) of "O" included in PVA and "Li" included in lithium salt is 0.52.

**Example 9**

A composite solid electrolyte was prepared in the same manner as in Example 1, except that PEO is used instead of polymer PVA.

**Example 10**

A composite solid electrolyte was prepared in the same manner as in Example 1, except that PIR is used instead of polymer PVA.

**Comparative Example 1**

A composite solid electrolyte was prepared in the same manner as in Example 1, except that after preparation of the composite, the step after the sintering process is not performed.

**Comparative Example 2**

A composite solid electrolyte was prepared in the same manner as in Comparative Example 2, except that instead of curing after irradiation with ultraviolet (UV) light, it is dried at 80 °C for 2 hours.

**Experimental Example**

**Experimental Example 1**

In order to measure the ionic conductivity of the composite solid electrolytes in the form of films prepared in the Examples and the Comparative Examples, the composite solid electrolyte was punched out in a circle with a size of 1.7671 cm$^2$, and the punched composite solid electrolyte was placed between two sheets of stainless steel (SS) to prepare a coin cell.

Using an electrochemical impedance spectrometer (EIS, VM3, Bio Logic Science Instrument), the resistance was measured under conditions of an amplitude of 10 mV and a scan range of 500 KHz to 20 MHz at 25 °C, and then, using Equation 1 below, the ionic conductivity of the composite solid electrolyte was calculated.

$$[\text{Equation 1}]$$

$$\sigma_i = \frac{L}{RA}$$

wherein, $\sigma_i$ is the ionic conductivity (S/cm) of the composite solid electrolyte, R is the resistance ($\Omega$) of the composite solid electrolyte measured by the electrochemical impedance spectrometer, L is the thickness of the composite solid electrolyte ($\mu$m), and A is the area of the composite solid electrolyte (cm$^2$).

The ionic conductivity of the composite solid electrolyte calculated using Equation 1, the possibility of forming a free-standing film, and the results of observing the appearance of the composite solid electrolyte are shown in Table 2 below. At this time, the possibility of forming the free-standing film (formation: ○, non-formation: X) and the appearance of the composite solid electrolyte were visually observed.

Table 2:

| | Ionic conductivity (S/cm) | Possibility of forming free-standing film | Remarks |
|---|---|---|---|
| **Example 1** | $1.5 \times 10^{-5}$ | ○ | - |
| **Example 2** | $1.3 \times 10^{-5}$ | ○ | - |
| **Example 3** | - | X | Impossible to prepare solution (aggregation of ceramic particles) |
| **Example 4** | - | X | Impossible to form ionic conductor after sintering |
| **Example 5** | - | X | Impossible to prepare cross-linked film |
| **Example 6** | - | X | Impossible to prepare cross-linked film |
| **Example 7** | - | X | Formation of brittle film, difficult to handle, impossible to measure ionic conductivity |
| **Example 8** | - | X | Formation of sticky gel |
| **Example 9** | $1.5 \times 10^{-5}$ | ○ | - |
| **Example 10** | $1.0 \times 10^{-5}$ | ○ | - |
| **Comparati ve Example 1** | not measurable | X | Impossible to form ceramic ion conductor due to no sintering |

(continued)

|  | Ionic conductivity (S/cm) | Possibility of forming free-standing film | Remarks |
|---|---|---|---|
| Comparati ve Example 2 | not measurable | X | Impossible to prepare cross-linked film |

As shown in Table 2, it was confirmed that a ceramic ion conductor is formed by irradiating and curing solution obtained by mixing a first polymer, which is the UV curable polymer, and a ceramic compound in an appropriate weight ratio with UV, and then applying a sintering process, and a composite solid electrolyte can be prepared using the ceramic ion conductor prepared through the above process (Examples 1 to 10) .

In Examples 3 and 4, it was confirmed that when the weight ratio of the first polymer, which is a UV curable polymer, and the ceramic compound is exceeding 1: 10 or less than 10: 1, a ceramic ion conductor is not formed. Therefore, it was confirmed that in order to form the ceramic ion conductor according to the present invention, the weight ratio of the first polymer and the ceramic compound in an appropriate range must be satisfied.

In Examples 5 and 6, it was confirmed that if the appropriate range of photo-initiator content is not included, it is impossible to prepare a cross-linked film.

In Examples 7 and 8, it was confirmed that when preparing the composite solid electrolyte, if the concentrations of the second polymer and lithium salt are out of the range of 0.1 to 0.5, it is not suitable for manufacturing the desired composite solid electrolyte because it is impossible to form a film.

Through Comparative Examples 1 and 2, it was found that even if a UV curable polymer is simply used, if UV irradiation and curing are not performed or a sintering process is not applied, a ceramic ion conductor or cross-linked film is not formed.

In the above, although the present invention has been described by way of limited embodiments, the present invention is not limited thereto, and it is apparent to those skilled in the art that various modifications and variations can be made within the equivalent scope of the technical spirit of the present invention and the claims to be described below.

## Claims

1.  A method for preparing a composite solid electrolyte for a lithium secondary battery, comprising the steps of:

    (S1) forming a coating film by applying a solution for forming a composite solid electrolyte including a first polymer, which is a UV curable polymer, and a ceramic compound, on a substrate;
    (S2) preparing the first composite by irradiating the coating film with ultraviolet rays (UV), and then curing it;
    (S3) preparing a ceramic ion conductor by sintering the first composite; and
    (S4) preparing a second composite by immersing the ceramic ion conductor in a solution including the second polymer and the lithium salt and curing it.

2.  The method for preparing the composite solid electrolyte for the lithium secondary battery according to claim 1, wherein the first polymer comprises at least one selected from the group consisting of polyisocyanurate (PIR), epoxy, polyurethane, polyacrylate, and poly(methyl methacrylate) (PMMA).

3.  The method for preparing the composite solid electrolyte for the lithium secondary battery according to claim 1, wherein the ceramic compound comprises at least one selected from the group consisting of lithium-lanthanum-zirconium oxide (LLZO) based, lithium-silicon-titanium phosphate (LSTP) based, lithium-lanthanum-titanium oxide (LLTO) based, lithium-aluminum-titanium phosphate (LATP) based, lithium-aluminum-germanium phosphate (LAGP) based, and lithium-lanthanum-zirconium-titanium oxide (LLZTO) based compounds.

4.  The method for preparing the composite solid electrolyte for the lithium secondary battery according to claim 1, wherein the ceramic compound is contained in an amount of 1 part by weight or more and less than 10 parts by weight based on 1 part by weight of the first polymer.

5.  The method for preparing the composite solid electrolyte for the lithium secondary battery according to claim 1, wherein the second polymer comprises at least one selected from the group consisting of polyvinyl alcohol (PVA), polyethylene oxide (PEO), polyacrylate, poly(methyl methacrylate) (PMMA), poly(4-styrenesulfonyl(trifluoromethylsulfonyl)imide) (PSTFSI), polyurethane, nylon, poly(dimethylsiloxane), gelatin, methylcellulose, agar, dextran, poly(vinyl pyrrolidone), poly(acryl amide), poly(acrylic acid), starch-carboxymethyl cellulose, hyaluronic acid-methylcellulose, chitosan, poly(N-isopropylacrylamide), and amino-terminated polyethylene glycol (amino-terminated PEG).

6. The method for preparing the composite solid electrolyte for the lithium secondary battery according to claim 1, wherein the lithium salt comprises at least one selected from the group consisting of $(CF_3SO_2)_2NLi$ (Lithium bis(tri-fluoromethanesulphonyl)imide, LiTFSI), $(FSO_2)_2NLi$ (Lithium bis(fluorosulfonyl)imide, LiFSI), $LiNO_3$, LiOH, LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, LiSCN and LiC $(CF_3SO_2)3$.

7. The method for preparing the composite solid electrolyte for the lithium secondary battery according to claim 1, wherein the molar ratio of lithium ([Li]) in the lithium salt to the molar concentration ([G]) of the second polymer is 0.1 to 0.5.

8. A composite solid electrolyte for a lithium secondary battery comprising a ceramic ion conductor including a ceramic compound; a second polymer; and a lithium salt, which is prepared by the preparation method of claim 1.

9. The composite solid electrolyte for the lithium secondary battery according to claim 8, wherein the ceramic compound comprises at least one selected from the group consisting of lithium-lanthanum-zirconium oxide (LLZO) based, lithium-silicon-titanium phosphate (LSTP) based, lithium-lanthanum-titanium oxide (LLTO) based, lithium-aluminum-titanium phosphate (LATP) based, lithium-aluminum-germanium phosphate (LAGP) based, and lithium-lanthanum-zirconium-titanium oxide (LLZTO) based compounds.

10. The composite solid electrolyte for the lithium secondary battery according to claim 8, wherein the second polymer comprises at least one selected from the group consisting of polyvinyl alcohol (PVA), polyethylene oxide (PEG), polyacrylate, poly(methyl methacrylate) (PMMA), poly(4-styrenesulfonyl(trifluoromethylsulfonyl)imide) (PSTFSI), polyurethane, nylon, poly(dimethylsiloxane), gelatin, methylcellulose, agar, dextran, poly(vinyl pyrrolidone), poly(acryl amide), poly(acrylic acid), starch-carboxymethyl cellulose, hyaluronic acid-methylcellulose, chitosan, poly(N-isopropylacrylamide), and amino-terminated polyethylene glycol (amino-terminated PEG) .

11. The composite solid electrolyte for the lithium secondary battery according to claim 8, wherein the lithium salt comprises at least one selected from the group consisting of LiTFSI(Lithium bis(trifluoromethanesulphonyl)imide, LiFSI(Lithium bis(fluorosulfonyl)imide), $LiNO_3$, LiOH, LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, LiSCN, LiC $(CF_3SO_2)$ 3, $(CF_3SO_2)_2NLi$, $(FSO_2)_2NLi$, chloroborane lithium, lower aliphatic carboxylic acid lithium, and lithium tetraphenylborate.

12. The composite solid electrolyte for the lithium secondary battery according to claim 8, wherein the molar ratio of lithium ([Li]) in the lithium salt to the molar concentration ([G]) of the second polymer is 0.1 to 0.5.

13. The composite solid electrolyte for the lithium secondary battery according to claim 8, wherein the composite solid electrolyte is in the form of a free-standing film.

14. The composite solid electrolyte for the lithium secondary battery according to claim 8, wherein the ionic conductivity of the composite solid electrolyte is $1.0 \times 10^{-5}$ S/cm or more.

15. An all-solid-state battery comprising the composite solid electrolyte for the lithium secondary battery according to any one of claims 8 to 14.

<div align="center">**INTERNATIONAL SEARCH REPORT**</div>

| International application No. |
|---|
| **PCT/KR2023/007475** |

**A.　CLASSIFICATION OF SUBJECT MATTER**

**H01M 10/056**(2010.01)i; **H01M 10/052**(2010.01)i

According to International Patent Classification (IPC) or to both national classification and IPC

**B.　FIELDS SEARCHED**

Minimum documentation searched (classification system followed by classification symbols)

H01M 10/056(2010.01); C01B 32/168(2017.01); C08K 3/013(2018.01); H01M 10/052(2010.01); H01M 10/36(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: UV경화성 고분자(UV curable polymer), 세라믹(ceramic), 소결(sintering), 리튬염 (lithium salt), 고체 전해질(solid electrolyte)

**C.　DOCUMENTS CONSIDERED TO BE RELEVANT**

| Category* | Citation of document, with indication, where appropriate, of the relevant passages | Relevant to claim No. |
|---|---|---|
| A | KR 10-2021-0121884 A (JAEWON INDUSTRIAL CO., LTD. et al.) 08 October 2021 (2021-10-08)<br>See paragraphs [0083], [0085], [0089], [0091] and [0092]; and claims 1, 7 and 8. | 1-15 |
| A | JP 2009-238739 A (TOKYO METROPOLITAN UNIV. et al.) 15 October 2009 (2009-10-15)<br>See entire document. | 1-15 |
| A | KR 10-2017-0076246 A (POSCO et al.) 04 July 2017 (2017-07-04)<br>See entire document. | 1-15 |
| A | KR 10-2020-0000575 A (INDUSTRY FOUNDATION OF CHONNAM NATIONAL UNIVERSITY) 03 January 2020 (2020-01-03)<br>See entire document. | 1-15 |
| A | KR 10-2020-0033421 A (LG CHEM, LTD.) 30 March 2020 (2020-03-30)<br>See entire document. | 1-15 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 September 2023** | **08 September 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/007475**

| Patent document cited in search report | | | Publication date (day/month/year) | Patent family member(s) | | | Publication date (day/month/year) |
|---|---|---|---|---|---|---|---|
| KR | 10-2021-0121884 | A | 08 October 2021 | KR | 10-2428210 | B1 | 02 August 2022 |
| JP | 2009-238739 | A | 15 October 2009 | EP | 2099086 | A1 | 09 September 2009 |
| | | | | EP | 2099086 | B1 | 19 December 2012 |
| | | | | JP | 5376364 | B2 | 25 December 2013 |
| | | | | US | 2009-0226790 | A1 | 10 September 2009 |
| | | | | US | 8309257 | B2 | 13 November 2012 |
| KR | 10-2017-0076246 | A | 04 July 2017 | KR | 10-1796749 | B1 | 10 November 2017 |
| KR | 10-2020-0000575 | A | 03 January 2020 | KR | 10-2133477 | B1 | 13 July 2020 |
| KR | 10-2020-0033421 | A | 30 March 2020 | | None | | |

Form PCT/ISA/210 (patent family annex) (July 2022)

**EP 4 456 236 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220067022
- KR 1020230070203
- KR 1020170045011